# EUROPEAN PATENT APPLICATION

(11) **EP 3 967 729 A1**
(43) Date of publication of application: **16.03.2022**
(21) Application number: 20801538.8
(22) Date of filing: 24.04.2020
(51) Int. Cl.: C08L 63/00, C08K 3/32, C08K 5/3445

(54) **LATENT CURING CATALYST AND RESIN COMPOSITION CONTAINING SAME**

(30) Priority: 08.05.2019 JP 2019088045
(71) Applicant: Namics Corporation, Niigata-shi, Niigata 950-3131 (JP)
(72) Inventor: SHIMOMURA, Osamu, Osaka-shi, Osaka 535-8585 (JP); IWAYA, Kazuki, Niigata-shi, Niigata 950-3131 (JP)
(74) Representative: Hoffmann Eitle
(86) International application number: PCT/JP2020/017678
(87) International publication number: WO 2020/226077

(57) **Abstract**

The present invention addresses the problem of providing a latent curing catalyst having excellent storage stability and capable of performing a curing reaction at a low temperature of less than 100°C, and a resin composition containing the catalyst.

The present invention provides a latent curing catalyst including zirconium phosphate fine particles containing a curing accelerator, wherein the zirconium phosphate fine particles containing the curing accelerator do not have a sharp crystalline peak at a diffraction angle (2θ) in a range of 10° to 40° in powder X-ray diffraction and have a broad halo pattern.

## Description

### TECHNICAL FIELD

The present invention relates to a latent curing catalyst, a resin composition containing the catalyst, and a method for producing zirconium phosphate fine particles containing a curing accelerator.

### BACKGROUND ART

Alpha-zirconium phosphate (a-ZrP) forms a layered structure by cross-linking phosphates pairs above and below the zirconium atom surface. It is known that zirconium phosphate can intercalate basic compounds such as amine compounds into the interlayer by utilizing the properties of the phosphate groups in the interlayer as solid acids (see, for example, Non-Patent Documents 1 and 2).

A curing accelerator that has the characteristic that a mixture of epoxy resin and curing accelerator can be stored under room temperature conditions, and that becomes active and progresses in curing only when curing by an external stimulus such as heat or light, is called a latent curing catalyst. Various types of latent curing catalysts have been developed, and it has been reported that an amine compound used as an epoxy resin curing accelerator is intercalated between the layers of layered zirconium phosphate to be used as a latent curing catalyst that does not react with the resin under one-component storage conditions, i.e., the reaction does not proceed under storage conditions and is inactive, but proceeds only under heating conditions (see, for example, Patent Documents 1 to 5).

### PRIOR ART DOCUMENTS

### Patent Documents

Patent Document 1: Japanese Patent Application Kokai Publication No. 2014-101397
Patent Document 2: Japanese Patent Application Kokai Publication No. H09-003166
Patent Document 3: Japanese Patent Application Kokai Publication No. H07-149874
Patent Document 4: Japanese Patent Application Kokai Publication No. H07-25989
Patent Document 5: Japanese Patent Application Kokai Publication No. H06-025388

### Non-Patent Documents

Non-Patent Document 1: R.M. Tindwa, D.K. Ellis, G.Z. Oeng, A. Clearfield, J. Chem. Soc., Faraday Trans., 81, 545 (1985)
Non-Patent Document 2: A. Clearfield, R.M. Tinda, J. Inorg. Nucl. Chem., 41, 871 (1979)

### SUMMARY OF THE INVENTION

### Problems to be Solved by the Invention

Conventional latent curing catalysts consisting of amine compounds intercalated with zirconium phosphate, such as those described in Patent Documents 1 to 5, have excellent storage stability, but the curing reaction can only be carried out at high temperatures of 100°C or higher, making them unsuitable for use in materials with low heat resistance. On the other hand, when manufacturing image sensor modules used as camera modules for cell phones and smartphones, one-component adhesives that thermally cure at relatively low temperatures, specifically lower than 100°C, are used. Even during the manufacture of electronic parts such as semiconductor devices, integrated circuits, large-scale integrated circuits, transistors, thyristors, diodes, and capacitors, it may be desirable to use one-component adhesives that thermally cure at temperatures lower than 100°C. Therefore, there is a need for latent curing catalysts and resin compositions that can carry out curing reactions at low temperatures less than 100°C.

The present invention addresses the problem of providing a latent curing catalyst having excellent storage stability and capable of performing a curing reaction at a low temperature of less than 100°C, and a resin composition containing the catalyst.

### Means to Solve the Problems

Specific measures to solve the aforementioned problems are as follows.

The first embodiment of the present invention is a latent curing catalyst including zirconium phosphate fine particles containing a curing accelerator, wherein the zirconium phosphate fine particles containing the curing accelerator do not have a sharp crystalline peak at a diffraction angle (2θ) in a range of 10° to 40° in powder X-ray diffraction and have a broad halo pattern.

The second embodiment of the present invention is a resin composition containing (A) an epoxy resin and (B) the latent curing catalyst of the first embodiment.

The third embodiment of the present invention is an adhesive containing the resin composition of the second embodiment.

The fourth embodiment of the present invention is a film containing the resin composition of the second embodiment.

The fifth embodiment of the present invention is a cured product obtained by curing the resin composition of the second embodiment.

The sixth embodiment of the present invention is a method for producing a cured product, including a step of curing the resin composition of the second embodiment.

The seventh embodiment of the present invention is a method for producing zirconium phosphate fine particles containing a curing accelerator, including:
(a) dissolving a zirconium salt of a fatty acid or a zirconium alkoxide in a solvent to obtain a solution; and
(b) mixing the solution obtained in the step (a) with phosphoric acid to obtain zirconium phosphate fine particles; and
(c) mixing a medium containing the zirconium phosphate fine particles with a curing accelerator to obtain zirconium phosphate fine particles containing the curing accelerator.

### Effects of the Invention

According to the present invention, it is possible to provide a latent curing catalyst having excellent storage stability and capable of performing curing reactions at low temperatures of less than 100°C, a resin composition containing the catalyst, and an adhesive and a film containing the resin composition. The zirconium phosphate fine particles containing the curing accelerator as a latent curing catalyst have a very small average particle diameter, which allows them to penetrate into narrow gaps and can be used for bonding and sealing of narrow gaps. Therefore, according to the present invention, it is possible to provide a latent curing catalyst, a resin composition containing the catalyst, and an adhesive and a film containing the resin composition, which have excellent storage stability, can perform curing reactions at low temperatures of less than 100°C, and can be used for bonding and sealing of narrow gaps. The present invention also provides a method for producing zirconium phosphate fine particles containing a curing accelerator that can be used as a latent curing catalyst that has excellent storage stability and can perform curing reactions at low temperatures of less than 100°C.

### Brief description of the drawing

Figure 1 shows powder X-ray diffraction patterns of zirconium phosphate fine particles containing a curing accelerator in Example A. Figure 1-1 shows a powder X-ray diffraction pattern of zirconium phosphate fine particles containing a curing accelerator with solvent. Figure 1-2 shows a powder X-ray diffraction pattern of zirconium phosphate fine particles containing a curing accelerator with the solvent removed.
Figure 2 shows a TEM photograph of zirconium phosphate fine particles containing a curing accelerator in Example A, taken over an arbitrary area of about 400 nm × 600 nm.
Figure 3 shows a powder X-ray diffraction pattern of amine-containing zirconium phosphate crystalline particles produced according to the method described in Japanese Patent Application Kokai Publication No. 2014-101397.

### EMBODIMENTS TO CARRY OUT THE INVENTION

### [Latent curing catalyst]

The first embodiment of the present invention, a latent curing catalyst, is a latent curing catalyst including zirconium phosphate fine particles containing a curing accelerator, wherein the zirconium phosphate fine particles containing the curing accelerator do not have a sharp crystalline peak at a diffraction angle (2θ) in a range of 10° to 40° in powder X-ray diffraction and have a broad halo pattern. In the present invention, zirconium phosphate fine particles containing a curing accelerator can be used directly as a latent curing catalyst. The latent curing catalyst of this embodiment has excellent storage stability and can perform curing reactions at low temperatures of less than 100°C. In addition, since the average particle diameter of the latent curing catalyst is very small, it can penetrate into narrow gaps and can be used for bonding and sealing of narrow gaps.

### [Zirconium phosphate fine particles containing a curing accelerator]

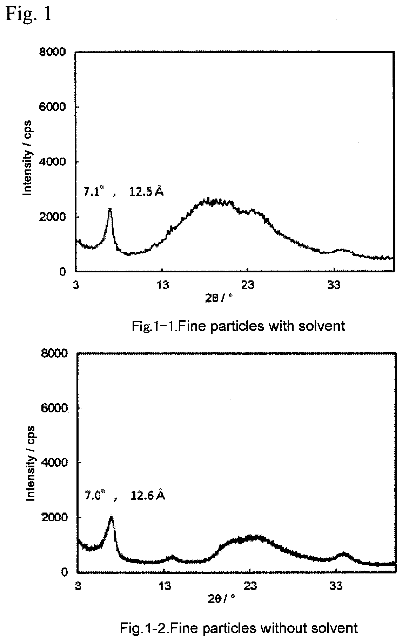

The zirconium phosphate fine particles containing a curing accelerator in this embodiment have low crystallinity and a broad halo pattern in powder X-ray diffraction without a sharp crystalline peak at a diffraction angle (2θ) in a range of 10° to 40°. For example, it shows a powder X-ray diffraction pattern which is substantially identical to Figure 1. Note, however, that with respect to the powder X-ray diffraction pattern, the diffraction peak intensities in the experimental pattern can be different and may vary due to the preferred orientation in the prepared sample, as is well known in the art.

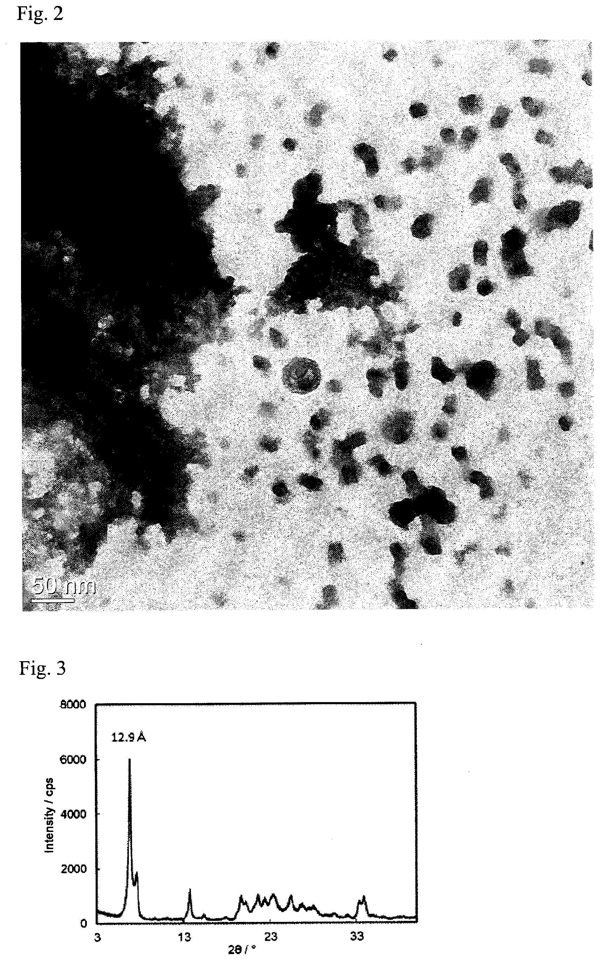

Conventional layered zirconium phosphate with intercalated curing accelerators between the layers can be obtained, for example, by mixing layered zirconium phosphate with a curing accelerator and reacting at room temperature to 40°C for 1 hour to 1 month (see, for example, Japanese Patent Application Kokai Publication No. 2014-101397). Zirconium phosphate with a layered structure has a uniform interlayer distance and high crystallinity (see Figure 3). The particle diameter of zirconium phosphate with a layered structure can be controlled by its production method, and the particle diameter on the plate surface is usually 1 µm to 100 µm (in addition, zirconium phosphate with a layered structure usually takes the form of flat particles). Zirconium phosphate with a layered structure can be produced, for example, by mixing and reacting zirconium chloride octahydrate with an aqueous phosphoric acid solution (L. Sun, W.J. Boo, H.-J. Sue, A. Clearfield, New J. Chem., 31, 39 (2007)).

The zirconium phosphate fine particles containing a curing accelerator in the present invention can be obtained by mixing zirconium phosphate fine particles with the curing accelerator. In the series of reactions to obtain zirconium phosphate fine particles containing a curing accelerator in the present invention, the external temperature is not limited, and for example, it can be carried out at room temperature to 40°C. Unlike conventional methods of producing zirconium phosphate with a layered structure, zirconium phosphate fine particles can be obtained, for example, by dissolving a zirconium salt of a fatty acid or a zirconium alkoxide in a solvent to obtain a solution, and then mixing the solution with phosphoric acid. Although the zirconium phosphate fine particles obtained in this way have a layered structure, their interlayer distance is wide, their crystallinity is low, and their average particle diameter is 1 nm to 500 nm. It is thought that the low crystallinity of the zirconium phosphate fine particles in the zirconium phosphate fine particles containing a curing accelerator in the present invention makes it easy for the curing accelerator intercalated between the layers to be activated, and for example, even low-temperature thermal stimulation of 60°C or higher, preferably 70°C or higher, and more preferably 80°C or higher activates the curing accelerator, allowing the curing reaction to take place at low temperatures. In addition, the zirconium phosphate fine particles containing a curing accelerator in the present invention have a very small average particle diameter of 1 nm to 500 nm, so they can penetrate into narrow gaps and can be used for bonding and sealing of narrow gaps.

The method for producing zirconium phosphate fine particles containing a curing accelerator in the present invention includes the following steps:
(a) dissolving a zirconium salt of a fatty acid or a zirconium alkoxide in a solvent to obtain a solution;
(b) mixing the solution obtained in the step (a) with phosphoric acid to obtain zirconium phosphate fine particles; and
(c) mixing a medium containing the zirconium phosphate fine particles with a curing accelerator to obtain zirconium phosphate fine particles containing the curing accelerator. A method for producing zirconium phosphate fine particles containing a curing accelerator is an embodiment of the present invention.

First, (a) a zirconium salt of a fatty acid or a zirconium alkoxide is dissolved in a solvent to obtain a solution. The zirconium salt of fatty acid is zirconium salts of fatty acids, and can be zirconium salts of mono-fatty acids or zirconium salts of poly-fatty acids such as di-fatty acids. The fatty acids are preferably fatty acids with 1 to 6 carbon atoms, such as acetic acid, propionic acid, isobutyric acid, butyric acid, isovaleric acid, valeric acid, caproic acid, and lactic acid. Among these, the zirconium salt of fatty acid is preferably zirconium propionate.

The zirconium alkoxide is represented by the formula:

Zr-(OR¹)₄

or

O=Zr(OR¹)₂

wherein R¹ is independently methyl, ethyl, n-propyl, i-propyl, n-butyl, and tert-butyl.

Solvents can be any solvents in which zirconium salts of fatty acids or zirconium alkoxides can be dissolved, and examples thereof may include alcohols such as methanol, ethanol, propanol, and butanol; esters such as ethyl acetate and methyl acetate; ketones such as acetone and 2-butanone; ethers such as diethyl ether, dimethyl ether, diisopropyl ether, and tetrahydrofuran; amides such as dimethylformamide and dimethylacetamide; dimethyl sulfoxide, N-methylpyrrolidone, acetonitrile, chloroform, dichloromethane, etc.; and mixtures of these solvents. Of these, alcohols or esters are preferred.

Next, (b) the solution obtained in the step (a) above is mixed with phosphoric acid to obtain zirconium phosphate fine particles. The molar ratio of zirconium to phosphoric acid in zirconium phosphate fine particles can be adjusted depending on the amount of phosphoric acid used, and the amount of phosphoric acid used is, for example, 1 mol or more, preferably 2 mol or more, and 10 mol or less, preferably 7 mol or less with respect to 1 mol of zirconium salt of fatty acid or zirconium alkoxide.

The mixing of the solution obtained in the step (a) with phosphoric acid is performed, for example, by adding phosphoric acid to the solution obtained in the step (a) and stirring. As soon as the solution obtained in the step (a) is mixed with phosphoric acid, zirconium phosphate fine particles are precipitated as a transparent gel-like substance. The precipitated zirconium phosphate fine particles contain the solvent used for production. If necessary, the precipitated zirconium phosphate fine particles may be washed and the aforementioned solvent may be replaced with other solvents. In addition to the solvents used in the step (a), alkanes such as hexane and heptane, and aromatic hydrocarbons such as benzene and toluene can be used as other solvents that can be used for washing and replacement. Here, the solvent containing zirconium phosphate fine particles can be used as a medium containing zirconium phosphate fine particles used in the next step (c).

Next, (c) a medium containing the zirconium phosphate fine particles and a curing accelerator are mixed to obtain zirconium phosphate fine particles containing the curing accelerator. The mixing of the medium containing the zirconium phosphate fine particles and the curing accelerator can be performed, for example, by adding the curing accelerator dissolved in a solvent to the medium containing the zirconium phosphate fine particles and stirring for 30 minutes to 24 hours. In addition to the solvents used in the step (a), alkanes such as hexane and heptane, and aromatic hydrocarbons such as benzene and toluene can be used as solvents to dissolve the curing accelerator, but preferably the same medium as the medium containing the zirconium phosphate fine particles is used. After completion of the reaction, the zirconium phosphate fine particles containing the curing accelerator can be obtained by separating from the medium and washing with an appropriate solvent. In this state, the zirconium phosphate fine particles containing the curing accelerator are a gel-like substance containing a solvent, and the solvent in the zirconium phosphate fine particles containing the curing accelerator can be removed by drying if necessary. Zirconium phosphate fine particles containing a curing accelerator can be used as a latent curing catalyst in either the solvent-containing state or the solvent-removed state.

Zirconium phosphate fine particles can contain curing accelerators, usually up to one equivalent of saturation with respect to one equivalent of phosphate groups in zirconium phosphate fine particles. Therefore, when mixing the medium containing zirconium phosphate fine particles and the curing accelerator, the amount of curing accelerator used is preferably 0.5 to 1.5 equivalents with respect to one equivalent of phosphate group of zirconium phosphate fine particles. This can produce a latent curing catalyst that contains 1 to 50 % by mass of the curing accelerator. For example, if the curing accelerator is an amine compound, the content (% by mass) of the amine compound in the latent curing catalyst can be calculated by determining the mass of nitrogen atoms contained in the dried latent curing catalyst using an elemental analyzer. Specifically, the content of the amine compound in the latent curing catalyst can be estimated by the following equation: (% by mass) = (mass percentage of nitrogen atoms in the elemental analysis results (% by mass) / (atomic weight of nitrogen [g/mol] × number of nitrogen atoms in the amine compound [units])) × molecular weight of the amine compound [g/mol].

The detailed conditions of the above steps (a) through (c) may be modified empirically.

The curing accelerator in zirconium phosphate fine particles containing the curing accelerator is one that lowers the activation energy of the curing reaction of epoxy resins, and any compound known as a curing accelerator for epoxy resins can be used. Of these, curing accelerators with basic properties are preferred because they have a greater effect on the storage stability of the resin composition. Preferred examples of curing accelerators may include imidazole compounds such as imidazole, 2-methylimidazole, 2-undecylimidazole, 2-heptadecylimidazole, 1,2-dimethylimidazole, 2-ethyl-4-methylimidazole, 2-phenylimidazole, benzimidazole, 2-phenyl-4-methylimidazole, 1-benzyl-2-methylimidazole, 1-benzyl-2-phenylimidazole, 1-cyano-2-methylimidazole, 1-cyano-2-undecylimidazole, 1-cyano-2-ethyl-4-methylimidazole, 1-cyano-2-phenylimidazole, 2,4-diamino-6-[2'-methylimidazolyl-(1')]-ethyl-s-triazine, 2,4-diamino-6-[2'undecylimidazolyl-(1')]-ethyl-s-triazine, 2,4-diamino-6-[2'-ethyl-4'-methylimidazolyl-(1')]-ethyl-s-triazine, 2-phenyl-4,5-dihydroxymethylimidazole, 2-phenyl-4-methyl-5-dihydroxymethylimidazole, 1,2-trimethylenebenzoimidazole, 1-dodecyl-2-methyl-3-benzylimidazole, 2-phenylimidazoline, benzimidazole, and 2-methylbenzimidazole; epoxy-imidazole adducts, which are adducts of these imidazole compounds with epoxy resins; tertiary amine compounds such as trisdimethylaminophenol, 2-(dimethylaminomethyl)phenol, trisdimethylaminomethylphenol, triethanolamine, benzyldimethylamine, hexamethylenetetramine, triethylenediamine, quinoline, N -methylmorpholine, dimethylaniline, dimethylcyclohexylamine, 1,8-diazabicyclo(5,4,0)-7-undecen-7 (DBU), 1,5-diazabicyclo(4,3,0)-5-nonene (DBN), 1,1,3,3-tetramethylguazinine, and 1,4-diaza-bicyclo(2,2,2)octane (DABCO); and triphenylphosphine (TPP), and the like. Among these, imidazole compounds and tertiary amine compounds are more preferred because they can be used to easily obtain excellent physical properties of the cured product, such as heat resistance and electrical properties. These can be used alone or in combination of two or more types.

The curing accelerator in the present invention is preferably a curing accelerator having a basic property, more preferably imidazole compounds, and even more preferably 1,2-dimethylimidazole, 2-ethyl-4 -methylimidazole, and 2-methylimidazole.

The zirconium phosphate fine particles containing the curing accelerator in this embodiment have an average particle diameter of the primary particles of 1 nm to 500 nm, preferably 5 nm to 450 nm, and more preferably 10 nm to 400 nm. As used herein, the average particle diameter of zirconium phosphate fine particles containing a curing accelerator is the average value obtained when the particle diameter of a plate surface (long axis length of the plate surface) of each of 20 arbitrary particles is measured by transmission electron microscopy (TEM). The shape of the zirconium phosphate fine particles containing the curing accelerator is not particularly limited, but usually takes the form of flat particles.

The zirconium phosphate fine particles containing the curing accelerator of the present invention contain some zirconium salts of fatty acids or zirconium alkoxides used as raw materials in their manufacture. This is thought to cause the interlayer distance of zirconium phosphate fine particles to become uneven and wide, resulting in low crystallinity. The amount of zirconium salts of fatty acids or zirconium alkoxides in the zirconium phosphate fine particles containing the curing accelerator is, for example, 0.01 mol to 0.8 mol, preferably 0.05 mol to 0.5 mol, with respect to 1 mol of zirconium in the zirconium phosphate fine particles. The presence and amount of zirconium salts of fatty acids or zirconium alkoxides in the zirconium phosphate fine particles containing the curing accelerator can be determined by, for example, time-of-flight secondary ion mass spectrometry (TOF-SIMS) or magic angle spinning (MAS) nuclear magnetic resonance spectroscopy (NMR).

### [Resin composition]

The second embodiment of the present invention, a resin composition, is a one-component epoxy resin composition containing (a) an epoxy resin and (b) the latent curing catalyst of the first embodiment.

### (A) Epoxy resin

The epoxy resin in the present invention is one in which one carbon atom of the epoxy ring is a primary carbon atom from the viewpoint of reactivity with curing accelerators. The epoxy resin is preferably liquid at ordinary temperature (25°C ± 5°C). However, it is also possible to dilute the epoxy resin, which is solid at ordinary temperature, with a diluent or the like to make it liquid for use.

Specifically, the (A) epoxy resin can be either a monoepoxy compound, a polyvalent epoxy compound, or a mixture thereof. Monoepoxy compounds may include, for example, glycidylbutyl ether, glycidylhexyl ether, glycidylphenyl ether, glycidylallyl ether, glycidyl para-tert-butylphenyl ether, ethylene oxide, propylene oxide, paraxylyl glycidyl ether, glycidyl acetate, glycidyl butyrate, glycidyl hexoate, glycidyl benzoate, and the like. Polyvalent epoxy compounds may include, for example, bisphenol type epoxy resins made by glycidylating bisphenols such as bisphenol A, bisphenol F, bisphenol AD, bisphenol S, tetramethylbisphenol A, tetramethylbisphenol F, tetramethylbisphenol AD, tetramethylbisphenol S, tetrabromobisphenol A, tetrachlorobisphenol A, and tetrafluorobisphenol A; epoxy resins made by glycidylating other divalent phenols such as biphenol, dihydroxynaphthalene, and 9,9-bis(4-hydroxyphenyl)fluorene; epoxy resins made by glycidylating trisphenols such as 1,1,1-tris(4-hydroxyphenyl)methane, and 4,4-(1-(4-(1-(4-hydroxyphenyl)-1-methylethyl)phenyl)ethylidene)bisphenol; epoxy resins made by glycidylating tetrakisphenols such as 1,1,2,2,-tetrakis(4-hydroxyphenyl)ethane;.novolac type epoxy resins made by glycidylating novolacs such as phenol novolac, cresol novolac, bisphenol A novolac, brominated phenol novolac, and brominated bisphenol A novolac; epoxy resins made by glycidylating polyhydric phenols; aliphatic ether type epoxy resins made by glycidylating polyhydric alcohols such as glycerin and polyethylene glycol;.ether ester type epoxy resins made by glycidylating hydroxycarboxylic acids such as p-oxybenzoic acid and β-oxynaphthoic acid; ester type epoxy resins made by glycidylating polycarboxylic acids such as phthalic acid and terephthalic acid; glycidyl type epoxy resins, such as glycidylated amine compounds such as 4,4-diaminodiphenylmethane and m-aminophenol, and amine-type epoxy resins such as triglycidyl isocyanurate; and the like. In the present invention, bisphenol type epoxy resins are preferred. Any one of the epoxy resins described above may be used, or two or more may be used in combination.

The content of the (A) epoxy resin in the resin composition of the present invention is preferably 2 to 80% by mass, more preferably 2.5 to 70% by mass, and even more preferably 3 to 60% by mass. When the content of the (A) epoxy resin in the resin composition is within the above-described range, the desired cured product can be obtained.

### (B) Latent curing catalyst

A (B) latent curing catalyst in the resin composition of the second embodiment of the present invention is the latent curing catalyst of the first embodiment of the present invention.

The curing accelerator in the (B) latent curing catalyst is preferably a curing accelerator having basic properties, more preferably imidazole compounds, and even more preferably 1,2-dimethylimidazole, 2-ethyl-4 -methylimidazole, and 2-methylimidazole.

The amount of the (B) latent curing catalyst (in a solvent-free state) in the epoxy resin composition is preferably 0.1 to 50% by mass, more preferably 1 to 45% by mass, and particularly preferably 3 to 40% by mass, with respect to the total of 100 parts by mass of components other than solid components such as fillers and pigments.

In addition to the (A) epoxy resin and the (B) latent curing catalyst, the resin composition of the present invention may contain additives as necessary to the extent that the effects of the present invention are not impaired. Additives may include, for example, (C) a curing agent other than the (B) latent curing catalyst, a filler, a diluent, a solvent, a pigment, a flexibility-adding agent, a coupling agent, an antioxidant, a thixotropic agent, and a dispersing agent.

The resin composition of the present invention can contain (C) a curing agent other than the (B) latent curing catalyst to the extent that the effects of the present invention are not impaired. As the (C) curing agent other than the (B) latent curing catalyst, phenol type curing agents, acid anhydrides, and thiol type curing agents are mentioned.

Phenol type curing agents refer to monomers, oligomers, and polymers in general that have phenolic hydroxyl groups. Specifically, phenol novolac resins and their alkylated or allylated compounds, cresol novolac resins, phenol aralkyl (including phenylene and biphenylene skeletons) resins, naphthol aralkyl resins, triphenol methane resins, dicyclopentadiene-type phenolic resins, etc. and combinations of these can be used.

As acid anhydrides, the following can be used: tetrahydrophthalic anhydride, hexahydrophthalic anhydride, methyltetrahydrophthalic anhydride, methylhexahydrophthalic anhydride, methylnagic anhydride, hydrogenated methylnagic anhydride, trialkyl tetrahydrophthalic anhydride, methylcyclohexene tetracarboxylic dianhydride, phthalic anhydride, trimellitic anhydride, pyromellitic anhydride, benzophenone tetracarboxylic dianhydride, ethylene glycol bis-anhydritrimellitate, glycerin bis-(anhydro trimellitate) monoacetate, dodecenyl succinic anhydride, aliphatic dibasic acid polyanhydride, chlorendic anhydride, methylbutenyltetrahydrophthalic anhydride, alkylated tetrahydrophthalic anhydride, methylhymic anhydride, succinic anhydride substituted with alkenyl groups, glutaric anhydride, and the like, and a combination thereof.

As thiol-based curing agents, aliphatic polythiol compounds, aromatic polythiol compounds, thiol-modified reactive silicone oil compounds, and the like, and a combination thereof can be used.

When the (C) curing agent other than the (B) latent curing catalyst is included, with respect to the amount of the (C) curing agent, the equivalent ratio of the active group of the (C) curing agent to the epoxy group of the (A) epoxy resin is preferably 0.05 to 1.5, and is more preferably 0.1 to 1.2.

A method of producing the resin composition of the present invention is not particularly limited, but the resin composition of the present invention can be obtained, for example, by stirring, melting, mixing, and dispersing the (A) epoxy resin, the (B) latent curing catalyst, and the additives that may be used as necessary, either simultaneously or separately, with heat treatment applied as necessary. Devices for mixing, stirring, dispersing, etc. for these are not particularly limited, but a Rycai machine equipped with stirring and heating devices, three-roll mill, ball mill, planetary mixer, bead mill, etc. can be used. A combination of these devices may also be used as appropriate.

In the resin composition of the present invention, the (B) latent curing catalyst does not cause a curing reaction of the (A) epoxy resin at ordinary temperature, so the resin composition of the present invention has good storage stability at ordinary temperature and a long pot life. The (B) latent curing catalyst in the resin composition of the present invention can be activated by heating to a temperature of 60°C or higher, preferably 70°C or higher, more preferably 80°C or higher, for example, to activate the curing accelerator in the (B) latent curing catalyst and cause a curing reaction of the (A) epoxy resin. Conventional latent curing catalysts, which consist of intercalating a curing accelerator into crystalline zirconium phosphate, can only perform the curing reaction at high temperatures above 100°C (see, for example, Japanese Patent Application Kokai Publication No. 2014-101397). It is believed that the low crystallinity of the zirconium phosphate fine particles containing the curing accelerator makes it easy for the curing accelerator intercalated between the layers to be activated, and that the curing accelerator can be activated even by thermal stimulation at low temperatures of less than 100°C, enabling the curing reaction to take place at low temperatures. Therefore, the resin composition of the present invention is suitable as a one-component adhesive for use in the manufacture of image sensor modules and electronic components, since it can be bonded by heating to a temperature of, for example, 60°C or higher, preferably 70°C or higher, more preferably 80°C or higher. The resin composition of the present invention progresses without problems in the curing reaction at high temperatures, and the upper limit of the curing temperature is, for example, 200°C or lower, preferably 180°C or lower, and more preferably 150°C or lower.

In addition, the zirconium phosphate fine particles containing the curing accelerator in the (B) latent curing catalyst of the present invention are very small, with an average particle diameter of 1 nm to 500 nm, so they can penetrate into narrow gaps. Therefore, the resin composition of the present invention can be used for bonding and sealing of narrow gaps, and is useful as an adhesive and sealing material used in the manufacture of semiconductor devices.

Therefore, an adhesive containing the resin composition of the second embodiment above is also an embodiment of the present invention.

In recent years, film-form adhesives have been widely used as adhesives for die bonding, interlayer bonding, and semiconductor encapsulation, which are advantageous for downsizing and miniaturization of support members. Since the average particle diameter of the included zirconium phosphate particulates containing the curing accelerator is very small, ranging from 1 nm to 500 nm, the resin composition can be made into a film with a thickness of 1 µm or less, making it highly useful when a thin layer film-form adhesive is required. Therefore, a film containing the resin composition of the second embodiment is also an embodiment of the present invention.

### [Cured product]

The cured product obtained by curing the resin composition of the present invention is also an embodiment of the present invention. The method for producing the cured product includes a step of curing the resin composition. The curing of the resin composition can be performed, for example, by heating to a temperature of 60°C or higher, preferably 70°C or higher, more preferably 80°C or higher. The heating time is not particularly limited, but can be from about 30 minutes to 24 hours.

In addition to the adhesives and films, the resin compositions or cured products of the present invention can be used in various fields such as for paints, civil engineering and construction, electrical, transportation equipment, medical, packaging, textiles, and sports and leisure. For example, metals, glass, plastics, mortar, concrete, rubber, wood, leather, cloth, and paper are examples of adherends to which the epoxy resin composition or epoxy resin cured product of the present invention can be applied.

### EXAMPLES

The invention will be described in more detail by means of examples and comparative examples, but the invention is not limited to these examples. Unless otherwise stated, preparation and evaluation were carried out at ordinary temperature (25°C ± 5°C).

### [Preparation of zirconium phosphate fine particles containing curing accelerators]

### (Example A)

To 0.838 g of zirconium propionate dissolved in 10 ml of ethanol, 1.2 ml (17.6 mmol) of phosphoric acid was added little by little and stirred vigorously. After a few minutes, zirconium phosphate fine particles were obtained as a transparent gel-like substance. The obtained gel-like zirconium phosphate fine particles were washed three times (4000 rpm × 3 min) with ethanol and then solvent replaced three times (4000 rpm × 3 min) with toluene. To the gel-like zirconium phosphate fine particles containing toluene, a solution of 1.20 g (10.9 mmol) of 2-ethyl-4-methylimidazole dissolved in 10.7 mL of toluene was added and stirred for 1 hour. After completion of the reaction, the particles were washed three times (4000 rpm × 3 min) with toluene to obtain 9.99 g of zirconium phosphate fine particles containing the curing accelerator as a gel-like substance containing the solvent.

Powder X-ray diffraction patterns of zirconium phosphate fine particles containing the curing accelerator were measured by an X-ray diffractometer (from Rigaku Corporation) using CuKa radiation.

The zirconium phosphate fine particles containing the curing accelerator with the solvent were measured under the following X-ray powder diffraction conditions.
Scanning rate: 10.0 deg/min.
Target: CuKa.
Voltage: 40kV.
Current: 40mA.
Scanning range: 3 to 40.0 degrees.
Sampling width: 0.100 degrees.

The zirconium phosphate fine particles containing the curing accelerator with the solvent removed were measured under the following X-ray powder diffraction conditions.
Scanning rate: 2.00 deg/min.
Target: CuKa.
Voltage: 40kV.
Current: 40mA.
Scanning range: 3 to 40.0 degrees.
Sampling width: 0.0200 degrees.

Powder X-ray diffraction patterns of zirconium phosphate fine particles containing the curing accelerator are shown in Figure 1. Figure 1-1 is a powder X-ray diffraction pattern of zirconium phosphate fine particles containing the curing accelerator with the solvent. Figure 1-2 is a powder X-ray diffraction pattern of zirconium phosphate fine particles containing the curing accelerator with the solvent removed.

TEM photographs of zirconium phosphate fine particles containing the curing accelerator were taken using a transmission electron microscope (TEM) (from FEI Company, model number: Titan Cubed G2 60-300) in an arbitrary range of about 400 nm × 600 nm. The average value when the particle diameter of the plate surface of 20 particles (long axis length of the plate surface) was measured was used as an average particle diameter. The average particle diameter of zirconium phosphate fine particles containing the curing accelerator was 20 nm by TEM observation. The TEM photograph of zirconium phosphate fine particles containing the curing accelerator is shown in Figure 2.

### [Preparation of resin composition]

Each resin composition was prepared by mixing the following components in the proportions of each of Examples 1 to 4 and Comparative Examples 1 to 4 listed in Table 1, and then removing the solvent using a vacuum dryer for 6 hours at ordinary temperature. For the (B) latent curing catalyst, the (B) latent curing catalyst containing the solvent was mixed with the resin composition, followed by vacuum drying of the entire resin composition to remove the solvent in the (B) latent curing catalyst. The percentages of the respective components shown in Table 1 are all expressed in parts by mass, and a blank column means that the component is not blended. The "amine content (g)" listed in Table 1 is a content of amine in each resin composition, where this amine is the amine in the dried (B) and (B'). This amine content was calculated based on the amount of nitrogen atoms relative to the mass of dried (B) and (B'), based on the results of elemental analysis using elemental analyzer 2400II from PerkinElmer Inc.

### (A) Epoxy resin

Bis-A type epoxy resin-Bis-F type epoxy resin mixture (EXA835LV, from DIC Corporation)

### (B) Latent curing catalyst

The zirconium phosphate fine particles containing the curing accelerator produced in Example A above were used. In Table 1, the masses listed outside the parentheses are the masses for those containing the solvent before solvent removal, and the masses listed in the parentheses are the masses for those after solvent removal.

### (B') Amine-containing zirconium phosphate crystalline particles

The particles were produced using 2-ethyl-4-methylimidazole as amine according to the method described in Japanese Patent Application Kokai Publication No. 2014-101397. The powder X-ray diffraction pattern is shown in Figure 3. The measurement conditions for X-ray powder diffraction are as follows.
Scanning rate: 2.00 deg/min.
Target: CuKa.
Voltage: 40kV.
Current: 40mA.
Scanning range: 3 to 40.0 degrees.
Sampling width: 0.0200 degrees.

### (C) Curing agent

(C1) Liquid phenolic resin (MEH8005, from Meiwa Plastic Industries, Ltd.)
(C2) Acid anhydride (HN5500, from Hitachi Chemical Company, Ltd.)
(C3) Thiol resin (PEMP, from SC Organic Chemical Co., Ltd.)

### [Evaluation of curing property]

Each curing property of the prepared epoxy resin compositions was evaluated by dropping a drop of the respective resin compositions to form a hemispherical sample and then observing the state of the sample when it was heated at 150°C, 120°C, 100°C, and 80°C for one hour. The measurement results are shown in Table 1 below. When the hemispherical sample was solid and had no tack, it was judged to be sufficiently cured and marked ∘; when the hemispherical sample was solid but had tack, it was judged to be cured to some extent and marked △; and when the hemispherical sample did not become solid, it was judged to be uncured and marked ×.

### [Evaluation of pot life]

For the prepared epoxy resin compositions, the viscosity (Pa·s) at 25°C was measured at 50 rpm using a rotational viscometer HBDV-1 (using spindle SC4-14) from Brookfield, and was used as an initial viscosity. Next, the each epoxy resin composition was placed in a sealed container and stored at 25°C. The viscosity at the end of 0, 6, and 30 hours was measured using the same procedure, and the thickening ratio (thickening ratio after storage for 0, 6, and 30 hours), which is an index of pot life, was determined. The measurement results are shown in Table 1 below. For pot life, it is desirable that the post-storage thickening ratio is 2 times or less.

**[Table 1]**

| | | Examle 1 | Example 2 | Example 3 | Example 4 | Comparative Example 1 | Comparative Example 2 | Comparative Example 3 | Comparative Example 4 |
|---|---|---|---|---|---|---|---|---|---|
| (A) Epoxy resin | | 10 | 5.6 | 5.2 | 5.6 | 10 | 5.6 | 5.2 | 5.6 |
| (B) Latent curing catalyst | | 10 (1.5) | 10 (1.5) | 10 (1.5) | 10 (1.5) | | | | |
| (B') Amine-containing zirconium phosphate crystalline particles | | | | | | 2.8 | 2.8 | 2.8 | 2.8 |
| (C1) Liquid phenolic resin | | | 4.4 | | | | 4.4 | | |
| (C2) Acid anhydride | | | | 4.8 | | | | 4.8 | |
| (C3) Thiol resin | | | | | 4.4 | | | | 4.4 |
| Amine content (g) | | 0.54 | 0.54 | 0.54 | 0.54 | 0.55 | 0.55 | 0.55 | 0.55 |
| Evaluation of curing property (○: Cured, △: Had tack, ×: Uncured) | 150°C 1h | ○ | ○ | ○ | ○ | × | ○ | ○ | ○ |
| | 120°C 1h | ○ | ○ | ○ | ○ | × | ○ | ○ | ○ |
| | 100°C 1h | ○ | ○ | ○ | ○ | × | △ | ○ | ○ |
| | 80°C 1h | △ | ○ | ○ | ○ | × | × | × | × |
| Evaluation of pot life (Initial ratio: times) | 0h | 1.0 | 1.0 | 1.0 | 1.0 | 1.0 | 1.0 | 1.0 | 1.0 |
| | 6h | 1.0 | 1.1 | 1.0 | 1.0 | 1.0 | 1.0 | 1.0 | 1.0 |
| | 30h | 1.0 | 1.1 | 1.9 | 1.5 | 1.0 | 1.5 | 1.2 | 1.1 |

As can be seen from the results shown in Table 1, the resin compositions of Examples 1 to 4 containing the latent curing catalyst of the present invention showed good curing property at all curing temperatures of 80°C, 100°C, 120°C and 150°C. On the other hand, the resin compositions of Comparative Examples 1 to 4, which did not contain the latent curing catalyst of the present invention and contained amine-containing zirconium phosphate crystalline particles of the conventional product, all failed to cure at a curing temperature of 80°C. The resin compositions of Examples 1 to 4 also had excellent pot life as well as the conventional products.

The disclosure of Japanese Patent Application No. 2019-088045 (filing date: May 8, 2019) is incorporated herein by reference in its entirety.

All references, patent applications, and technical standards described herein are incorporated herein by reference to the same extent as if the individual references, patent applications, and technical standards were specifically and individually noted as being incorporated by reference.

## Claims

1. A latent curing catalyst comprising zirconium phosphate fine particles containing a curing accelerator, wherein the zirconium phosphate fine particles containing the curing accelerator do not have a sharp crystalline peak at a diffraction angle (2θ) in a range of 10° to 40° in powder X-ray diffraction and have a broad halo pattern.

2. The latent curing catalyst according to claim 1, wherein an average particle diameter of the zirconium phosphate fine particles containing the curing accelerator is 1 nm to 500 nm.

3. The latent curing catalyst according to claim 1 or 2, wherein the zirconium phosphate fine particles containing the curing accelerator contain a zirconium salt of a fatty acid or a zirconium alkoxide.

4. A resin composition comprising (A) an epoxy resin and (B) the latent curing catalyst according to any one of claims 1 to 3.

5. The resin composition according to claim 4, wherein the curing accelerator in the (B) latent curing catalyst is an imidazole compound.

6. The resin composition according to claim 4 or 5, further comprising (C) a curing agent.

7. An adhesive comprising the resin composition according to any one of claims 4 to 6.

8. A film comprising the resin composition according to any one of claims 4 to 6.

9. A cured product obtained by curing the resin composition according to any one of claims 4 to 6.

10. A method for producing a cured product, comprising a step of curing the resin composition according to any one of claims 4 to 6.

11. A method for producing zirconium phosphate fine particles containing a curing accelerator, comprising:
(a) dissolving a zirconium salt of a fatty acid or a zirconium alkoxide in a solvent to obtain a solution; and
(b) mixing the solution obtained in the step (a) with phosphoric acid to obtain zirconium phosphate fine particles; and
(c) mixing a medium containing the zirconium phosphate fine particles with a curing accelerator to obtain zirconium phosphate fine particles containing the curing accelerator.

12. The method of production according to claim 11, wherein the zirconium salt of a fatty acid is zirconium propionate.
